# EUROPEAN PATENT SPECIFICATION

(11) **EP 3 426 755 B1**
(45) Date of publication and mention of the grant of the patent: **20.07.2022**
(21) Application number: 17721052.3
(22) Date of filing: 09.03.2017
(51) Int. Cl.: C11D 3/04, C11D 11/00, C11D 7/14, C11D 7/10, C11D 7/06, C11D 3/48, C11D 3/395, C11D 3/08, C04B 41/53, C04B 41/00, C04B 41/90

(54) **EXTERNAL SURFACE CLEANING COMPOSITION**
ZUSAMMENSETZUNG ZUR REINIGUNG ÄUSSERER OBERFLÄCHEN
COMPOSITION DE NETTOYAGE DE SURFACES EXTERNES

(30) Priority: 10.03.2016 GB 201604140
(43) Date of publication of application: 16.01.2019
(73) Proprietor: Monty Miracle Ltd, Bradford, BD2 3AY (GB)
(72) Inventor: Beaumont, Martin, Bradford, Yorkshire BD2 3AY (GB)
(74) Representative: Hepworth Browne
(86) International application number: PCT/EP2017/055532
(87) International publication number: WO 2017/153516

(56) References cited:
- WO-A1-97/06231
- US-A- 5 356 716
- J Larosa Thompson ET AL: "PI1 SOOOS-8846(97)00167-l CHARACTERIZATION OF SILICATE SEALERS ON CONCRETE", Pergamon Cement and Concrete Research Copyright Elsevier Science Ltd (Refereed) (Received April, 1 January 1997 (1997-01-01), pages 1561-1567, XP055697938, Retrieved from the Internet: URL:https://www.sciencedirect.com/science/ article/pii/S0008884697001671 [retrieved on 2020-06-02]

## Description

This invention relates to a composition for cleaning masonry or other external surfaces particularly, but not exclusively for removing moss, lichen or algae or other growths from outdoor surfaces or constructions such stonework, brick, tiles, slates, concrete, composites, cementitious coatings and rendering. The composition also may be applied for cleaning external woodwork, metalwork or other surfaces.

Conventional methods of cleaning masonry and similar surfaces include use of chemical cleaning preparations and high pressure jet washers. Commonly used concentrated hypochlorite-containing solutions are undesirable because they cause discolouration of stone surfaces. Concentrated hypochlorite solutions are also hazardous to a user and pets and may cause damage to adjacent plants. High pressure jet washers have an environmental impact using diesel or petrol driven pumps to create the pressure needed to clean a surface. They are also slow and noisy to use and cause surface damage. They often achieve an uneven clean, leaving wand-mark stains. Although water jets may clean a surface layer they do not penetrate into a porous or absorbent surface, instead pushing the organic growth deeper into the surface, leaving the surface harder to clean year on year. This reduces the cleaning ability of jet washing, and leaves spores which may germinate to repopulate a newly cleaned surface. The aim is to reduce emissions using electric motors instead of diesel engines.

WO 9706231A1 discloses a one-step cleaning and water repellent treatment. An alkaline-stable cleaning solution is mixed with an aqueous solution of alkali metal organosiliconates and applied to porous inorganic surfaces as a one-step cleaning and water repellent treatment. The one-step cleaning and water repellent treatment functions to simultaneously clean and protect porous inorganic surfaces and, thus, reduces the cost and time necessary to clean and protect such a surface.

US5356716A discloses a waterproofing sealer composition that protects various types of porous substrates from deterioration due to water absorption and thus extend their useful lives. Example of porous substrate are concrete, brick, masonry, ceramics, stones, cloth, wood and the like. These waterbased compositions comprise alkali metalalkylsiliconates, alkali silicates, polymers, diluents and additives. These sealer compositions do not change appearance and character of the substrate surface.

Thompson et al (Characterisation of Silicate Sealers on Concrete, Cement and Concrete Research, Vol 27, No. 10, 151-1567) discloses work to contribute to the understanding of how the application of soluble silicate alters the surface of concrete by verifying its effects on absorption, abrasion resistance, chloride permeability, chloride penetration, and surface composition.

According to a first aspect of the present invention an external surface cleaning composition comprises:

| | |
|---|---|
| sodium hypochlorite | 1wt% to 5.5wt%; |
| potassium silicate | 0.3wt% to 3.0wt%; |
| alkali hydroxide | 0.01wt% to 0.5wt%; |
| a foaming agent; | |
| optional further ingredients; and | |
| water | balance to 100% |

According to a second aspect of the present invention a method of cleaning an external surface comprises the steps of:
mixing of an aqueous solution of sodium hypochlorite and an additive solution comprising: alkaline silicate; potassium hydroxide; a foaming agent; optional further ingredients; and water, to form an external surface cleaning composition comprising:

| | |
|---|---|
| sodium hypochlorite | 1wt% to 5.5wt%; |
| potassium silicate | 0.3wt% to 3.0wt%; |
| alkali hydroxide | 0.01wt% to 0.5wt%; |
| a foaming agent; | |
| optional further ingredients; and | |
| water | balance to 100%; and |

application of the cleaning composition to an external surface.

The external surface may be selected from one or more of: masonry, stonework, bricks, slates, concrete, composites, cementitious coatings, rendering, external woodwork and metalwork. The invention finds particular application to porous surfaces. The invention is not intended for application to domestic internal or non-porous surfaces such as kitchen or bathroom units, work surfaces and floors.

According to a third aspect of the present invention a method of cleaning an external surface comprises the steps of:
application to the external surface of a pre-mixed external surface cleaning composition comprising:

| | |
|---|---|
| sodium hypochlorite | 1wt% to 5.5wt%; |
| potassium silicate | 0.3wt% to 3.0wt%; |
| alkali hydroxide | 0.01wt% to 0.5wt%; |
| a foaming agent; | |
| optional further ingredients; and | |
| water | balance to 100%; |

allowing the composition contact with the surface; and
rinsing the surface with water.

The solution may remain in contact with the surface for a period of 5 to 20 minutes, typically about 8 to 15 minutes, more preferably about 10 to 12 minutes.

Conventionally supplied sodium hypochlorite solution has a strength of 14wt% to 16wt%. Such a high concentration of hypochlorite may cause staining of masonry surfaces and can cause damage to plants and animals. The present invention uses a lower hypochlorite concentration while retaining cleaning efficacy.

The present invention confers an advantage in that the concentration of sodium hypochlorite solution necessary to provide efficient cleaning has been reduced to an environmentally safe level at which the sodium hypochlorite is not effective when used alone but which surprisingly provides a highly effective cleaning composition when used in combination with the additive defined above.

Use of the additive allows manufacture of an effective cleaning composition in which the concentration of sodium hypochlorite is reduced below a level conventionally considered essential for effective cleaning of masonry surfaces. A lower powered pump may be used in comparison to a jet washer as was previously required to achieve cleaning of a masonry surface. Use of a pump driven by a diesel motor is not required.

Particularly advantageous compositions provide a protective effect which increase the time period that a cleaned surface remains free of organic growth.

Conventional 14wt% to 16wt% sodium hypochlorite solution may be diluted to a ratio of sodium hypochlorite:water from about 1:3 to about 3:1, preferably about 1:1 by weight. Amounts of hypochlorite:water in such ratios can then be used in the additive solution. Alternatively, such ratios can be used in the external surface cleaning composition. Preferred concentrations prevent a minimal hazard to pets or surrounding plants.

The concentration of alkali hypochlorite in the external surface cleaning composition, preferably sodium hypochlorite may be from about 1wt% to about 5.5wt%, preferably from about 2wt% to about 3.5%, more preferably 2wt% to about 2.5wt%.

Amounts and percentages referred to in this specification are by weight unless indicated otherwise and are selected from any ranges quoted to total 100%.

The dilution used in a composition in accordance with this invention may be selected dependent on the degree of contamination of the surface with organic growth.

Compositions of the present invention have the further advantage that they may be applied very rapidly to a wall, roof, patio or other surface in comparison to the time required for corresponding treatment with a jet washer or when using a conventional concentrated hypochlorite solution which may require careful application.

According to an aspect of the present invention there is provided an additive solution comprising:

| | |
|---|---|
| potassium silicate | 0.3 to 3.0wt%>; |
| alkali hydroxide, preferably potassium hydroxide | 1.0 to 10wt%; |
| a foaming agent; | |
| optional further ingredients; and | |
| water | balance to 100% |

The additive solution may be added to a sodium hypochlorite solution to reduce the concentration of sodium hypochlorite required for effective cleaning of masonry surfaces.

According to an aspect of the present invention there is provided a method of cleaning an external surface including the step of application of an external surface cleaning composition comprising an aqueous solution containing:

| | |
|---|---|
| sodium hypochlorite 1.0wt% to 5.5wt% | |
| and an additive solution comprising: | |
| potassium silicate | 0.3 to 3.0wt%: |
| alkali hydroxide, preferably potassium hydroxide | 0.01wt% to 0.5wt% |
| a foaming agent; | |
| optional further ingredients; and | |
| water | balance to 100% |

The method may further comprise the steps of allowing the composition to contact the surface followed by the step of rinsing of the surface with water. The method may include the step of allowing the composition to remain in contact with the surface for a period of 10 minutes or longer.

The alkali hydroxide is preferably potassium hydroxide or sodium hydroxide. Sodium hydroxide has been found to leave a white coloured residue on many surfaces. Use of potassium hydroxide is preferred despite the higher cost in comparison to sodium hydroxide.

The concentration of alkali hydroxide preferably potassium hydroxide in the additive solution, is from about 1wt% to about 10wt%, preferably from about 2wt% to about 8wt%, more preferably from about 2wt% to about 6wt%, more preferably from about 2.5wt% to about 5wt%. An especially advantageous concentration is about 3.5wt%. A minimum effective concentration of potassium hydroxide may be selected from the ranges quoted above.

The concentration of alkali hydroxide, preferably potassium hydroxide in the external surface cleaning composition, is from about 0.01wt% to about 0.5wt%, preferably from about 0.1wt% to about 0.3%, more preferably 0.25wt%.

Use of potassium silicate has been found to be particularly advantageous. Advantages achieved include reduction in discolouration of lead flashings or other rainwater goods.

An amount of potassium silicate is from about 0.3wt% to about 3wt%, preferably from about 0.5wt% to about 2wt%, more preferably from about 0.3wt% to about 1wt%, even more preferably from about 0.5wt% to about 1wt% may be employed. Higher amounts of potassium silicate may be used but these may increase costs without improving efficacy of the composition. Use of potassium silicate is especially preferred in comparison to sodium silicate as decomposition or degradation of the hypochlorite may be reduced. Preferred embodiments of this invention may not contain sodium or potassium metasilicate.

An amount of potassium silicate in the external surface cleaning composition is from about 0.3wt% to about 3wt%, preferably from about 0.5wt% to about 2wt%, more preferably from about 0.3wt% to about 1wt%, even more preferably from about 0.5wt% to about 1wt% may be employed. Higher amounts of potassium silicate may be used but these may increase costs without improving efficacy of the composition.

The concentration of potassium silicate in the external surface cleaning composition, is from about 0.3wt% to about 3.0wt%; alternately preferably from about 1.0wt% to about 2.0%, more preferably about 1.5wt%.

The silicate component is advantageous as it may serve to block pores or cracks in a masonry or other porous surface, preventing inoculation by spores or other organisms after treatment.

The foaming agent may comprise a foam stabiliser which facilitates application of a stable coating of the composition onto a surface to be treated. This allows the composition to remain on the surface for a sufficient time to enable penetrate to a greater depth, for example, to a depth of up to 3 to 5mm to ensure deactivation of any spores located within the surface. Organic infestation of a masonry surface usually does not exceed a depth of 2mm.

Use of a foaming agent confers the advantage that the area to which the composition has been applied may be easily observed, reducing wastage of the composition during application.

Water applied by a jet washer or a conventional hypochlorite solution penetrates deep into a masonry surface and thereby pushes organic infestation deep within the masonry. This results in a masonry surface which is harder to clean after each successive year. In contrast, the composition of the present invention has the further advantage that it does not penetrate to a depth greater than 3mm, when left for a period of up to 10 minutes. This results in less discolouration of the treated surface in comparison to a conventionally treated surface.

A preferred foam stabiliser is an amphoteric surfactant, for example an alkyl dimethyl amine oxide. Preferably lauryl dimethyl amine oxide, sold under the trade mark AMMONYX LO by Stepan Company, is employed.

The foaming agent may be present within the additive solution in an amount of from about 1wt% to about 4wt%, preferably from about 1.5wt% to about 3.5wt%, more preferably from about 2wt% to about 3.5wt%.

The foaming agent may be present within the external surface cleaning composition in an amount of from about 1wt% to about 4wt%, preferably from about 1.5wt% to about 3.5wt%, more preferably from about 2wt% to about 3.5wt%.

An amount of 1wt% to 2wt% of the foaming agent may provide an effective composition but a preferred amount is about 3.5wt%, particularly for use in cleaning red brick or stone surfaces. Use of a greater amount of the foaming agent may result in formation of an excessive amount of foam and undesirably increased rinsing times.

It is important that the foam composition can be washed easily from a surface after treatment. Therefore the foam stabiliser is selected to provide a stable foam but which permits rinsing.

A sequestering agent may be employed to reduce metal ion catalysed decomposition of the hypochlorite. A preferred agent is 2-phosphonobutane-1,2,4-tricarboxylic acid (PBTC). An amount of 4wt% may be employed.

Water used in the present composition is preferably deionised water in order to reduce decomposition of hypochlorite by dissolved metal ions.

Use of a cleaning composition in accordance with the present invention confers many advantages. The composition does not cause surface damage and is environmentally friendly.

A reduced ecological footprint is provided. Further the composition may be applied quickly and quietly without a liability to form wand mark stains on the treated surface.

The invention is further described by means of example but not in any limitative sense.

An additive solution comprising the following ingredients was prepared.

| | |
|---|---|
| potassium hydroxide | 4.5 grams, |
| potassium silicate | 3 grams, |
| alkyl dimethyl amine oxide | 4 grams; |
| 2-phosphonobutane-1,2,4- tricarboxylic acid (PBTC) | 4 grams |
| deionized water | 84.5grams |

The solution was mixed and added to the hypochlorite (10%) solution.

The solution was applied to the exterior walls and roof of a two storey house constructed from Yorkshire stone and ceramic tiles. The house had extensive moss and algal growth on the walls and roof. The solution was applied using a pump at a rate of 22.68 litres per minute. Coverage of an area of 60sq metres was achieved in seven minutes. The solution was allowed to remain on the surface for 10 to 12 minutes before being washed down with water from a hose. After treatment it was observed that 99% of organic staining had been removed.

## Claims

1. An external surface cleaning composition comprising:
| | |
|---|---|
| sodium hypochlorite | 1wt% to 5.5wt%; |
| potassium silicate | 0.3wt% to 3.0wt%; |
| alkali hydroxide | 0.01wt% to 0.5wt%; |
| a foaming agent; | |
| optional further ingredients; and | |
| water | balance to 100% |

2. A composition as claimed in claim 1, wherein the alkali hydroxide is potassium hydroxide.

3. A composition as claimed in claim 2, wherein the amount of potassium hydroxide is from 0.1wt% to 0.3wt%.

4. A composition as claimed in claim 3, wherein the amount of potassium hydroxide is 0.25wt%.

5. A composition as claimed in any preceding claim, wherein the amount of potassium silicate is from 1.0wt% to 2.0wt%.

6. A composition as claimed in any preceding claim, wherein the amount of silicate is 1.5wt%.

7. A composition as claimed in any preceding claim, wherein the amount of sodium hypochlorite is from 2wt% to 3.5wt%, preferably from 2wt% to 2.5wt%.

8. A composition as claimed in any preceding claim, wherein the foaming agent is a foam stabiliser.

9. A composition as claimed in claim 8, wherein the foam stabiliser is an alkyl dimethyl amine oxide.

10. A composition as claimed in claim 8 or 9, wherein the foaming agent is present in an amount from 1wt% to 4wt%, optionally 1.5wt% to 3.5wt%.

11. A composition as claimed in claim 10, wherein the foaming agent is present in an amount of 2wt% to 3.5wt%.

12. A method of cleaning an external surface comprising the steps of:
addition of an aqueous solution of sodium hypochlorite to an additive solution comprising: potassium silicate; alkali hydroxide; a foaming agent; optional further ingredients; and water, to form an external surface cleaning composition as claimed in claim 1; and
application of the cleaning composition to an external surface.

13. A method as claimed in claim 12, wherein the external surface is one or more of masonry, stonework, bricks, tiles, slates, concrete, composites, cementitious coatings, rendering, external woodwork and metalwork.

14. A method of cleaning an external surface comprising the step of:
application to the external surface of a pre-mixed external surface cleaning composition as claimed in any of claims 1 to 11.

15. A method as claimed in claim 14, wherein the external surface is a roof or wall of a building, pathway, road or other civil engineering construction.

## Patentansprüche

1. Verbindung zum Säubern von Außenoberflächen enthaltend:
| | |
|---|---|
| Natriumhypochlorit | 1 Gewichtsprozent bis 5,5 Gewichtsprozent; |
| Kaliumsilikat | 0,3 Gewichtsprozent bis 3,0 Gewichtsprozent; |
| Alkalihydroxid | 0,01 Gewichtsprozent bis 0,5 Gewichtsprozent; |
| ein Schäumungsmittel; | |
| optionale weitere Inhaltsstoffe; und | |
| Wasser | Ausgleich auf 100 Prozent. |

2. Verbindung nach Anspruch 1, wobei das Alkalihydroxid Kaliumhydroxid ist.

3. Verbindung nach Anspruch 2, wobei die Menge des Kaliumhydroxids von 0,1 Gewichtsprozent bis 0,3 Gewichtprozent ist.

4. Verbindung nach Anspruch 3, wobei die Menge des Kaliumhydroxids 0,25 Gewichtsprozent ist.

5. Verbindung nach einem der vorhergehenden Ansprüche, wobei die Menge des Kaliumsilikats von 1,0 Gewichtsprozent bis 2,0 Gewichtsprozent ist.

6. Verbindung nach einem der vorhergehenden Ansprüche, wobei die Menge des Silikats 1,5 Gewichtsprozent ist.

7. Verbindung nach einem der vorhergehenden Ansprüche, wobei die Menge an Natriumhypochlorit von 2 Gewichtsprozent bis 3,5 Gewichtsprozent, vorzugsweise von 2 Gewichtsprozent bis 2,5 Gewichtsprozent ist.

8. Verbindung nach einem der vorhergehenden Ansprüche, wobei das Schäumungsmittel ein Schaumstabilisator ist.

9. Verbindung nach Anspruch 8, wobei der Schaumstabilisator ein Alkyldimethlyaminoxid ist.

10. Verbindung nach einem der Ansprüche 8 oder 9, wobei das Schäumungsmittel in einer Menge von 1 Gewichtsprozent bis 4 Gewichtsprozent, optional von 1,5 Gewichtsprozent bis 3,5 Gewichtsprozent vorhanden ist.

11. Verbindung nach Anspruch 10, wobei das Schäumungsmittel in einer Menge von 2 Gewichtsprozent bis 3,5 Gewichtsprozent vorhanden ist.

12. Verfahren zum Säubern einer Außenoberfläche enthaltend die Schritte des:
Hinzufügens einer wässrigen Natriumhypochloritlösung zu einer Additivlösung enthaltend:
Kaliumsilikat; Alkalihydroxid; ein Schäumungsmittel; optionale weitere Inhaltsstoffe; und
Wasser, so dass eine Verbindung zum Säubern von Außenoberflächen nach Anspruch 1 entsteht; und
Anwendens der Säuberungsverbindung auf eine Außenoberfläche.

13. Verfahren nach Anspruch 12, wobei die Außenoberfläche eine oder mehrere aus Gemäuer, Mauerwerk aus Stein, Ziegel, Fliesen, Schieferplatten, Beton, Komposite, Zementbeschichtungen, Putz, externe Holzarbeit und Metallarbeit ist.

14. Verfahren zum Säubern einer Außenoberfläche enthaltend den Schritt des Aufbringens einer vorgemischten Verbindung zum Säubern von Außenoberflächen nach einem der Ansprüche 1 bis 11 auf eine Außenoberfläche.

15. Verfahren nach Anspruch 14, wobei die Außenoberfläche ein Dach oder eine Wand eines Gebäudes, eines Wegs, einer Straße, oder einer anderen Bauingenieurskonstruktion ist.

## Revendications

1. Composition de nettoyage de surface extérieure comprenant :
| | |
|---|---|
| de l'hypochlorite de sodium | 1 % en poids à 5,5 % en poids ; |
| du silicate de potassium | 0,3 % en poids à 3,0 % en poids ; |
| de l'hydroxyde alcalin | 0,01 % en poids à 0,5 % en poids ; |
| un agent moussant ; | |
| d'autres ingrédients optionnels ; et | |
| de l'eau jusqu'à en faire 100 % | |

2. Composition selon la revendication 1, selon laquelle l'hydroxyde alcalin est de l'hydroxyde de potassium.

3. Composition selon la revendication 2, selon laquelle la teneur en hydroxyde de potassium est de 0,1% en poids à 0,3 % en poids.

4. Composition selon la revendication 3, selon laquelle la teneur en hydroxyde de potassium est de 0,25 % en poids.

5. Composition selon l'une quelconque des revendications précédentes, selon laquelle la teneur en silicate de potassium est de 1,0 % en poids à 2,0 % en poids.

6. Composition selon l'une quelconque des revendications précédentes, selon laquelle la teneur en silicate est de 1,5 % en poids.

7. Composition selon l'une quelconque des revendications précédentes, selon laquelle la teneur en hypochlorite de sodium est de 2 % en poids à 3,5 % en poids, de préférence de 2 % en poids à 2.5 % en poids.

8. Composition selon l'une quelconque des revendications précédentes, selon laquelle l'agent moussant est un stabilisant de mousse.

9. Composition selon la revendication 8, selon laquelle le stabilisant de mousse est un oxyde d'alkyldiméthylamine.

10. Composition selon la revendication 8 ou la revendication 9, selon laquelle l'agent moussant est présent dans une teneur de 1 % en poids à 4 % en poids, et optionnellement de 1,5 % en poids à 3,5 % en poids.

11. Composition selon la revendication 10, selon laquelle l'agent moussant est présent dans une teneur de 2 % en poids à 3,5 % en poids.

12. Procédé de nettoyage d'une surface extérieure comprenant les étapes :
d'ajout d'une solution aqueuse d'hypochlorite de sodium à une solution additive comprenant : du silicate de potassium ; de l'hydroxyde alcalin ; d'un agent moussant ; d'autres ingrédients optionnels ; et de l'eau, afin de former une composition de nettoyage de surface extérieure selon la revendication 1 ; et
d'application de la composition de nettoyage à une surface extérieure.

13. Procédé selon la revendication 12, selon lequel la surface extérieure est une ou plusieurs surfaces choisies parmi de la maçonnerie, des ouvrages en pierre, des briques, des carreaux, de l'ardoise, du béton, des composites, des revêtements en ciment, des enduits, des ouvrages extérieurs en bois ou en métal.

14. Procédé de nettoyage d'une surface extérieure comprenant l'étape :
d'application à la surface extérieure d'une composition pré-mélangée de nettoyage de surface extérieure selon l'une quelconque des revendications 1 à 11.

15. Procédé selon la revendication 14, selon lequel la surface extérieure est une toiture ou un mur d'un bâtiment, d'un chemin, d'une route ou de toute autre construction d'ingénierie civile.
